# EUROPEAN PATENT SPECIFICATION

(11) **EP 0 543 639 B1**
(45) Date of publication and mention of the grant of the patent: **10.04.1996**
(21) Application number: 92310526.6
(22) Date of filing: 18.11.1992
(51) Int. Cl.: B29D 30/06, B60C 15/02

(54) **Post cure inflation rim for a tyre**
Felge zum Aufblasen eines Luftreifens nach der Aushärtung
Jante pour le gonflage d'un pneumatique pendant la post-vulcanisation

(30) Priority: 21.11.1991 JP 334009/91
(43) Date of publication of application: 26.05.1993
(73) Proprietor: SUMITOMO RUBBER INDUSTRIES LIMITED, Kobe-shi Hyogo-ken (JP)
(72) Inventor: Uemura, Yoshiaki, Kobe-shi, Hyogo-ken (JP)
(74) Representative: Stewart, Charles Geoffrey

(56) References cited:
- FR-A- 2 366 940
- GB-A- 2 004 508
- US-A- 2 992 671
- US-A- 4 169 698
- '1956 YEAR BOOK' 1956 , THE TIRE & RIM ASSOCIATION INC.,ARKON - OHIO - USA

## Description

The present invention relates to a post cure inflation rim (hereinafter referred to as a "PCI rim") for a tyre for vehicles .

For the carcass material of a tyre nylon, polyester or the like, are widely used. The temperature of a tyre just after vulcanisation in its mould, is very high and if the tyre is left as it is, contraction occurs in the carcass material and the tyre is significantly deformed.

In view of this problem, just after vulcanisation and while the tyre is still at high temperature, the tyre is fitted to a PCI rim (different from the rims used in a practical vehicle) to hold the tyre during cooling. A constant air pressure is applied to the assembly so that deformation and the like are prevented.

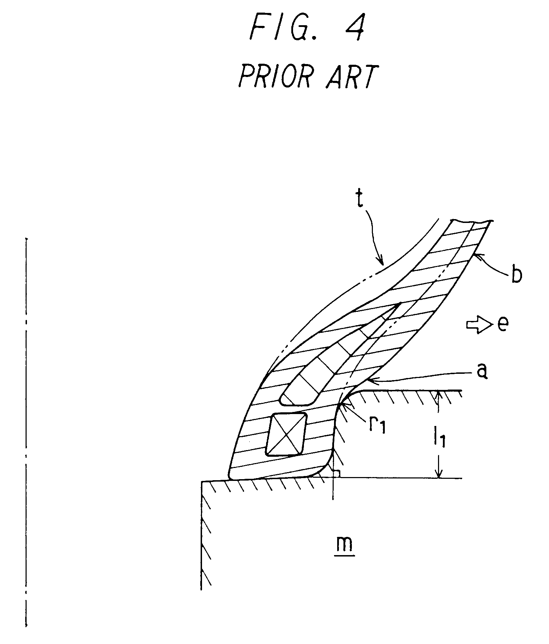

Fig.4. is an enlarged cross section of a tyre bead showing a PCI rim **m** AND A TYRE **t** engaged with each other. As shown in Fig.4, conventionally, a PCI rim has been designed so that the flange radius r₁ is smaller (for example, 5mm), and the flange height l₁ is small (for example, 10.5mm) for easy tyre detachability, or wide applicability to different tyres for PCI rims of different diameter.

US-A-4169698 discloses a tyre post cure inflation apparatus including sealing rings according to the preamble of claim 1. The sealing rings have a stepped conical surface to accommodate tyres of different bead diameters, each step having a flange including a straight chamfer at an angle of 45° which avoids interference with the tyre sidewall ensuring proper seating of the tyre in the apparatus.

However, in the case where a tyre **t** just after vulcanisation is assembled with the PCI rim **m** designed as mentioned above, the tyre is fitted with the portion from the clinch **a** to the sidewall **b** inclined in the direction of arrow **e**. This is shown by the full line in Fig. 4. An imaginary line in Fig. 4 shows the ideal shape of an assembled tyre without the inclination.

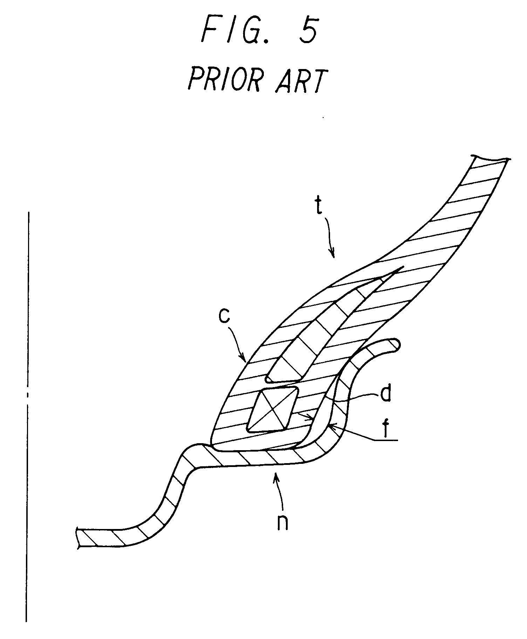

For this reason, as shown in Fig. 5, when the tyre **t** is assembled onto a vehicle rim **n** for use on a practical vehicle, a wide gap **f** is left between the heel **d** of the tyre bead **c** and the rim **n**. This wide gap **f** makes the engagement between the tyre **t** and the vehicle rim **n** non-uniform in the circumferential direction and accordingly the FV (Force Variation) great. This brings tyre vibration on rotation in use.

An object of the present invention is to solve the above-mentioned problem, namely to provide a PCI rim which reduces the gap between the heel of a tyre and its road or vehicle rim.

According to Claim 1 a PCI rim comprises a bead seat 3 and a flange 4 for engaging a tyre bead of a tyre T characterised in that an edge of the flange is rounded and the flange radius R1 of the flange is in the range of 7.5mm to 12mm, the flange height L of the flange is in the range of 14mm to 25mm and the bead seat radius R2 of the bead seat is in the range of 4.5mm to 7.0mm.

With the PCI rim of the present invention, in the conditions wherein a hot tyre just after vulcanisation is assembled with the rim, the tyre clinch portion is held without being outwardly inclined.

When the cooled tyre is later assembled to a vehicle rim for a practical vehicle, the gap between the tyre bead and the rim is smaller than in the case of a conventional tyre. Thanks to this, the contact area between the practical rim vehicle and the tyre bead is increased, and the engagement of the tyre with the rim is much less varied in the circumferential direction of the tyre.

Further aspects of the invention will be apparent from the following description by way of example only in conjunction with the diagrammatic drawings in which
Fig.1. is an enlarged cross section of a bead and PCI rim bead seat of the present invention.
Fig.2. is a cross section of a tyre and PCI rim.
Fig.3. is an enlarged cross section of a bead and rim 35 when a tyre is assembled with a wheel rim for a practical vehicle.
Fig.4. is a an enlarged cross section of a bead and PCI main rim of the prior art, and
Fig.5. is an enlarged cross section of a bead and road rim wherein the tyre shown in Fig.4 is assembled with a rim for a practical vehicle.

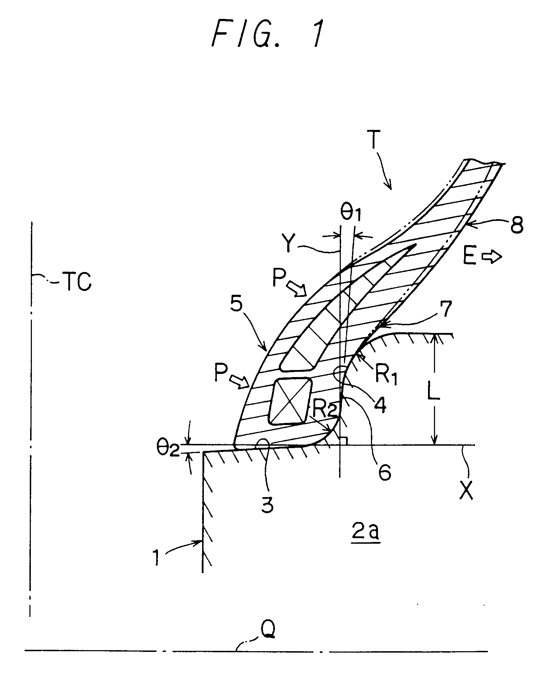

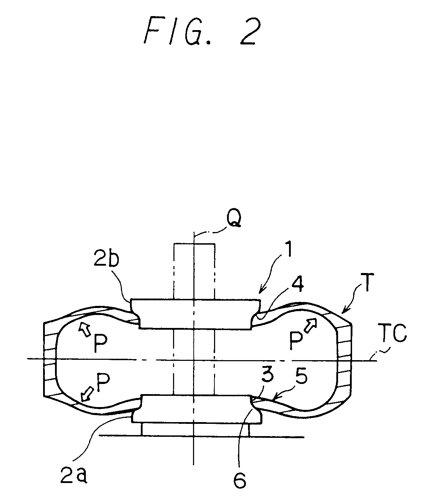

The PCI rim of Figs. 1 & 2 comprises a pair of first and second disk-like rims 2a and 2b. In Figs. 1 and 2, symbol Q represents the centre axis of a tyre T and a PCI rim 1, and symbol TC represents the equatorial plane of the tyre T perpendicular to the axis Q.

On an outer circumferential surface of the first rim 2a are provided a sloped bead seat 3 and a curved flange 4. The second rim 2b is also constructed similarly to the first rim 2a.

The tyre T to be assembled onto the rims 2a and 2b is taken just after vulcanisation and so it is hot. In fact it is so hot that if it was left to cool, heat contraction would deform the tyre.

Both tyre beads 5 of the tyre T are engaged on one of the bead seats 3 and the flange 4, and a constant air pressure is applied inside the tyre T. This internal pressure P causes the heel 6 of the tyre bead 5 to closely contact the bead seat 3 and the flange 4.

At this stage, as shown in Fig.1, the tyre T is in a condition wherein the region from the clinch 7 to the sidewall 8 is only slightly inclined in the direction of the arrow E compared to the condition indicated by the imaginary line wherein the tyre T is ideally shaped without added inclination.

Thereafter, the tyre T is cooled for a predetermined time period assembled on the PCI rim 1. Thus, significant deformation caused by heat contraction can be prevented and a tyre T almost without deformation as shown in Fig.1 is realised.

After the tyre T has cooled, the internal pressure P is released and the tyre T is taken off the PCI rim 1.

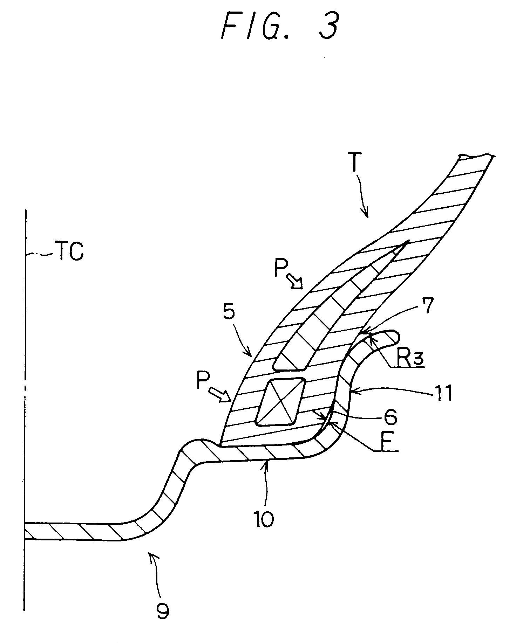

Fig.3. shows the tyre T assembled to a road vehicle rim 9 for a practical vehicle. In this condition, the tyre bead 5 of the tyre T is assembled on a bead seat 10 and a flange 11 of the vehicle rim 9, internal pressure P of the tyre T causing the tyre T to fit thereto.

Symbol F represents a maximum gap between the flange 11 and the heel portion of the tyre bead 5.

In order to minimise the gap F in the PCI rim **m** shown in Fig. 1, the inclination of the region from the clinch portion 7 to the sidewall 8 in the direction of the arrow E must be inhibited by supporting the tyre bead 5 with the flange. For this purpose, the flange radius R₁, the bead seat radius R₂ and the flange height L are set in the following dimension ranges respectively:-
1. 7.5 mm ≦ R₁ ≦ 12 mm
2. 4.5 mm ≦ R₂ ≦ 7.0 mm
3. 14 mm ≦ L ≦ 25 mm
The flange angle θ₁ and bead seat angle θ₂ are set in the following ranges. As to symbol X, it is the base line, indicating the rim diameter, parallel to the axis Q. The base line X crosses perpendicularly the flange base line Y.
4. -2° ≦ θ₁ ≦ 2°
5. 5° ≦ θ₂ ≦ 20°

Comparison data between gap F results from use of the PCI rim of the present invention and gap **f** (refer to Fig.5, results from a conventional PCI rim), and comparison data between displacements on rims for practical vehicles of two tyres each having the gap F and the gap **f** are respectively shown in the following Tables 1 and 2 for different tyre sizes. The displacement of rim for the practical vehicle means the circumferential displacement of a tyre relative to the vehicle rim which occurs when rapid acceleration and rapid braking are repeated a predetermined number of times.

**TABLE 1**

| **Comparison date for 195/70R14 tyre size** | | | |
|---|---|---|---|
| | | Conventional PCI rim | PCI rim of the present invention |
| Specification of PCI rim | θ₁ | 2° | 0° |
| | θ₂ | 16° | 16° |
| | R₁ | 16 mm | 9 mm |
| | R₂ | 4 mm | 6 mm |
| | L | 13.7 mm | 18.0 mm |
| Gap (f, F) | | 1.0-1.3 mm | 0.3-0.5 mm |
| Displacement of rim for practical vehicle | | 20-25 mm | 5-10 mm |

**TABLE 2**

| **Comparison date for 205/65ZR15 tyre size** | | | |
|---|---|---|---|
| | | Conventional PCI rim | PCI rim of the present invention |
| Specification of PCI rim | θ₁ | 0° | 0° |
| | θ₂ | 16° | 16° |
| | R₁ | 5 mm | 9 mm |
| | R₂ | 4 mm | 6 mm |
| | L | 10.35 mm | 18.0 mm |
| Gap (f, F) | | 1.0-1.5 mm | 0.5-0.7 mm |
| Displacement of rim for practical vehicle | | 30-40 mm | 5-7 mm |

As is obvious from the Tables 1 and 2, in the present invention the gap F is about one quarter to one half, and the displacement on the vehicle rim is about one-eight to one-half compared with the prior art. Thus, in the present invention they are significantly reduced and kept at significant low vales.

As explained above, the gap F becomes smaller and the contact area between the flange 11 of the vehicle rim 9 and the tyre bead 5 of the tyre T is increased as shown in Fig.3. This brings an unified circumferential engagement of the tyre T with the vehicle rim 9.

Setting the PCI rim specification at the above mentioned sizes 1 to 3 brings the maximum effect of the present invention.

If the rim specification is outside the size range 1 to 5, the following problems are brought.

As shown in Figs. 1 and 3, if the flange radius R₁ is more than 12 mm, the radius R₁ is greatly different from the flange radius R₃ of the vehicle rim 9, and if the flange radius R₁ is less than 7.5 mm, the inclination of the clinch portion 7 in the direction of the arrow E can scarcely be inhibited.

If the bead seat radius R₂ is more than 7mm, the gap F is further increased, and if the bead seat radius R₂ is less than 4.5 mm, suitable contact with pressure between the tyre bead 5 and the vehicle rim 9 vehicle cannot be expected.

If the flange height L is more than 25 mm, the gap (not shown) formed between the clinch portion 7 and the flange 4 of the PCI rim when the tyre T is assembled the PCI rim is increased, and if the flange height L is less than 14 mm, the clinch portion 7 is further significantly inclined in the direction of the arrow E and this brings further increased gap F.

If the flange angle θ₁ is more than 2°, when the tyre is assembled to the vehicle rim 9 the clinch portion 7 contacts the curved portion of radius R₃ too early. This increases the initial volume of air trapped. If the flange angle θ₁ is less than -2°, rim chafing happens. Rim chafing is a phenomenon where the tyre bead 5 and the flange 11 of the rim 9 chafe each other during road running.

If the bead seat angle θ₂ is more than 20° or the bead seat angle θ₂ is less than 5°, the rim 9 can not satisfactorily accommodate the tyre so that unified circumferential engagement of the tyre T with the PCI rim 1 can not be realised.

Since the present invention has the above mentioned structure, the following significant effects can be brought.

The gap F in a tyre and vehicle which can be significantly reduced compared with in the case of a conventional PCI rim. This brings unified circumferential engagement of the tyre T with the rim 9 so that FV can be inhibited significantly. Further vibration problems caused by tyre rotation on the rim is prevented and displacement on the rim is reduced.

## Claims

1. A PCI rim comprising a bead seat (3) and a flange (4) for engaging a tyre bead of a tyre T characterised in that an edge of the flange is rounded and the flange radius (R1) of the flange is in the range of 7.5mm to 12mm, the flange height (L) of the flange (4) is in the range of 14mm to 25mm, and the bead seat radius (R2) of the bead seat is in the range of 4.5mm to 7.00mm.

2. A PCI rim according to claim 1 characterised in that the flange angle θ₁, is in the range of 0-2° to + 2°.

3. A PCI rim according to claims 1 or 2 characterised in that the bead seat angle θ₂ is in the range of 5 to 20°.

## Patentansprüche

1. Eine PCI-Felge mit einem Wulstsitz (3) und einem Flansch (4), um mit einem Reifenwulst eines Reifens T in Eingriff zu gelangen,
dadurch **gekennzeichnet,**
daß eine Kante des Flansches gerundet ist und der Flanschradius (R1) des Flansches im Bereich von 7,5 mm bis 12 mm liegt, die Flanschhöhe (L) des Flansches (4) im Bereich von 14 mm bis 25 mm liegt, und der Wulstsitzradius (R2) des Wulstsitzes im Bereich von 4,5 mm bis 7,00 mm liegt.

2. Eine PCI-Felge nach Anspruch 1,
dadurch **gekennzeichnet,**
daß der Flanschwinkel θ₁ im Bereich von 0-2° bis +2° liegt.

3. Eine PCI-Felge nach Anspruch 1 oder 2,
dadurch **gekennzeichnet,**
daß der Wulstsitzwinkel θ₂ im Bereich von 5 bis 20° liegt.

## Revendications

1. Jante PCI comprenant un siège (3) de talon et un flasque (4) destinés à être au contact d'un talon d'un pneumatique T, caractérisée en ce qu'un bord du flasque est arrondi et le rayon (R1) du flasque est compris entre 7,5 et 12 mm, la hauteur (L) du flasque (4) est comprise entre 14 et 25 mm, et le rayon (R2) du siège de talon est compris entre 4,5 et 7,00 mm.

2. Jante PCI selon la revendication 1, caractérisée en ce que l'angle θ₁ du flasque est compris entre -2° et +2°.

3. Jante PCI selon la revendication 1 ou 2, caractérisée en ce que l'angle θ₂ du siège de talon est compris entre 5 et 20°.
